Europäisches Patentamt

(19) European Patent Office

Office européen des brevets

(11) Publication number: **0 185 454**
**B1**

(12) # EUROPEAN PATENT SPECIFICATION

(45) Date of publication of the patent specification:
09.08.89

(21) Application number: **85308176.8**

(22) Date of filing: **08.11.85**

(51) Int. Cl.⁴: **B32B 27/32**

(54) **Multi-layer oriented polypropylene films having comparatively low film-to-film coefficient of friction.**

(30) Priority: **19.12.84 US 683782**
**19.12.84 US 683781**

㊸ Date of publication of application
**25.06.86 Bulletin 86/26**

(45) Publication of the grant of the patent:
**09.08.89 Bulletin 89/32**

(84) Designated Contracting States:
**BE DE FR GB IT NL**

(56) References cited:
**EP-A- 0 122 495**
**EP-A- 0 144 642**

(73) Proprietor: **MOBIL OIL CORPORATION, 150 East 42nd Street, New York New York 10017(US)**

(72) Inventor: **Clauson, Melvil Bernard, 114 Bostwick Avenue, Newark New York 14513(US)**
Inventor: **Wagner, John Ralph, Jr., 300 Ashley Drive, Rochester New York 14620(US)**

(74) Representative: **Cooper, John Anthony, Mobil Court 3 Clements Inn, London WC2A 2EB(GB)**

## Description

This invention relates to a multi-layer polypropylene film structure having comparatively low film to film coefficient of friction.

Highly crystalline polypropylene film is an excellent packaging material, but it has a high film to film coefficient of friction which makes it difficult or impossible for it to be successfully utilized in automatic packaging equipment. The film will not respond to the packaging speed capability of the system and, as a consequence, jamming results. This material in film form also has a tendency to stick at heat seal surfaces, such as, in packages requiring hot crimp seals. Thus, it is impossible to employ this material in standard commercially available horizontal or vertical form and fill packaging systems without first modifying the polypropylene film so that it can be handled at practicle packaging speeds.

In the past, the coefficient of friction characteristics of polypropylene and other thermoplastic films have been beneficially modified by the inclusion in the polymer of coefficient of friction (COF) additives such as, for example, fatty acid amides. The effectiveness of an amide depends upon its ability to migrate to the surface of the films in order to reduce COF. While such amides do improve the COF of the films, the value of the COF is subject to wide variation depending upon the heat history which the film experiences during storage, shipping, and certain converting processes. The presence of such amides on the film surfaces can adversely affect the film's appearance as manifested by an increase in haze, a decrease in gloss and the presence of streaks. The presence of such amides on the surface can also adversely affect the wettability and adhesion of solvent and water base inks, coatings and adhesives.

The present invention provides an oriented film structure comprising polypropylene film having on at least one surface thereof a polymeric layer of a blend of (A)(I) a linear low density copolymer of ethylene with a minor proportion of a $C_3$-$C_{10}$ alpha olefin (LLDPE) and (II) polypropylene; or (B)(I) a member selected from a medium density polyethylene (MDPE), a high density polyethylene (HDPE) and mixtures thereof and (II) polypropylene.

The present invention also provides a process for preparing the oriented film structure comprising: applying to at least one surface of a polypropylene film, a polymeric layer comprising a blend (A) or (B) as defined above, bringing the combination to a stretch-orientable condition and stretching it in at least one direction. It is preferred that the polymeric layer is applied to the polypropylene film during coextrusion through a die followed by cooling prior to biaxial orientation.

It has been discovered that fatty acid amide and other types of COF improvers can be excluded from the film structure of the present invention.

The present invention is broadly directed to the presentation of an improved surface material on a core layer which is highly crystalline or highly stereoregular polypropylene in oriented film form. The preferred polypropylenes of the core layer are well known in the art and are formed by polymerizing propylene in the presence of stereospecific catalyst systems. These polypropylenes can have a melt flow rate at 230°C (446°F) ranging from about 1 to about 25, preferably 2 to 8. The crystalline melting point of these materials is about 161-169°C (321-336°F). The number average molecular weight ranges from about 25,000 to about 100,000. The density ranges from about 0.90-0.91 gm/cc.

The polymeric layer applied to the core or substrate polypropylene layer has a comparatively low coefficient of friction. This layer is formed from either of blends (A) and (B).

Blend (A) comprises (I) a linear low density copolymer of ethylene and a $C_3$-$C_{10}$ alpha olefin and (II) polypropylene. The $C_3$-$C_{10}$ alpha olefin is present in the copolymer in a minor amount. Included among the $C_3$-$C_{10}$ olefinic hydrocarbons are propylene, 1-butene, 4-methyl-1-pentene, 1-hexene, 1-octene, 1-decene, etc. Mixtures of such olefinic hydrocarbon monomers also can be employed. These linear low density copolymers are commercially available materials and are manufactured by low pressure processes employing stereospecific catalysts. These materials usually contain from 2-8 wt.%, preferably 2.5-5 wt.%, of the $C_3$-$C_{10}$ alpha olefin hydrocarbon copolymerized with the ethylene, in sufficient amount to give from 5-15 branches per 1,000 carbon atoms in the linear polymer. Manufacturing processes for linear low density polyethylenes of this type are disclosed in U.S. Patent Nos. 4,076,698 and 4,205,021.

Blend (B) comprises (I) a medium density polyethylene, a high density polyethylene or a mixture of the medium and high density polyethylene; and (II) polypropylene. The contemplated medium or high density polyethylene can be produced by a number of different processes, but in all cases the pressures and temperatures are much lower than those required by a low density polyethylene process. The American Society for Testing and Materials types polyethylenes as follows: Type 1 is low density polyethylene and can be considered to have a density ranging from about 0.910 to 0.925 gm/cm³; Type 2 is medium density polyethylene and it ranges from about 0.926-0.940 gm/cm³; and Type 3 is high density polyethylene with a density of from 0.941 to 0.960 gm/cm³. This is consistent with the classification given in Modern Encyclopedia, 1983-1984, Volume 60, No. 10A, page 57. For purposes of the present invention the high density should be extended up to 0.965. These materials, i.e. medium and high density polyethylene, should have a melt index of from about 0.2 to about 5. These low pressure or high density polyethylene are well known in the art and have very different properties from low density polyethylenes. They are prepared by reacting ethylene monomer in the presence of a metallic oxide catalyst. The medium and high density polyethylenes so produced may be linear, or may contain controlled amounts of branching. These polyethylenes are to be distinguished from high density, high molecular weight polyethylenes having a weight average molecular weight of about one-half million. The contemplated medium and high density polyethylenes are commercially available from several sources.

The exterior polymeric layers are fabricated from a physical blend of the materials defined above for (A) and (B). The polypropylene employed can be identical to the polypropylene employed for the core layer. Blend (A) comprises from about 2% by weight to about 90% by weight of the linear low density copolymer (Component I) and the remainder being polypropylene (Component II). Blend (B) comprises from about 2% by weight to about 60% by weight of the medium or high density polyethylene (Component I) and the remainder being polypropylene (Component II). The physical blend can be accomplished by any means which will form a uniform blend of the two components. The components can be premixed as solid dry granules and later melt blended for subsequent extrusion as skin layers on the core material. Alternatively, the material may be melt blended first, cooled and subdivided, and thus, be ready for use as a preformed material.

In the following examples, the polypropylene employed as the core material and also as the material blended with the linear low density copolymer is identified as an isotactic polypropylene, i.e., ARCO W472 available from ARCO Corp. Its melt flow range is 4-5 and it contains no slip or antiblock additives. The linear low density copolymer employed is a copolymer of ethylene and 1-octene (LLDPE-$C_8$). The 1-octene is present in the copolymer in approximately 2 to 6 wt. %. A suitable material is Dowlex 2047, available from Dow Chemical, Midland, Michigan. It has a melt index of 2.3, a density of 0.917 and contains no slip or antiblock additives. The medium density polyethylene (MDPE) used is TR130, having a Melt Index of 0.3 and a density of 0.937 gm/cm$^3$. It is available from Philips Chemical Co., Bartlesville, Oklahoma and contains no slip or antiblock additives.

The films formed in the following examples, as representative of the present invention, have a core of polypropylene and surface or skin layers on both surfaces of the core. It is understood, however, that structures having only one surface layer of the polymeric blend may also be formed.

EXAMPLE 1

Polypropylene homopolymer, ARCO W472, as hereinabove defined, was fed into the feed hopper of a conventional rotating screw extruder. The extruder employed had a 6.35 cm (2.5 inch) diameter and a length to diameter ratio of about 24:1. A satellite extruder was employed for the coextrusion of the hereinabove defined Dowlex 2047, linear low density copolymer of ethylene and 1-octene blended with above-identified polypropylene. The satellite extruder comprises a conventional extruder having an extruder screw with a 3.81 cm (1.5 inch) diameter and a length to diameter ratio of about 20:1. Molten blended resin from the satellite extruder consisted of 4% by weight of the linear low density copolymer of ethylene and 1-octene and 96 wt.% of the polypropylene. The molten blend was fed into the cast film die affixed to the end of the core extruder through an adapter specifically designed to join the polymer stream from the satellite extruder to the molten polymer core stream so that it covered and encompassed the molten surface of the core layer. The coextruded multi-layer structure was extruded through a slot onto a chill roll, to form a cast film of approximately 0.89 mm (35 mils) thick and 20.3 cm (8 inches) wide. This molten laminate, after extrusion was immediately quenched in a cold water bath and sequentially biaxially oriented on conventional equipment. During this process the quenched film was first reheated to approximately 143°C (290°F). and stretched in the machine direction employing differential speed rollers. The machine direction stretch was 5 times. This machine direction stretched material was then fed to the transverse orienter where it was heated to about 154°C (310°F) and stretched transversely to 8 times its original width. The now biaxially oriented film was cooled, trimmed and wound into a roll. The film had excellent optical clarity and was approximately 0.02 mm (0.85 mils) in thickness. The skin or surface layers each amounted to about 15% of the overall film thickness.

This procedure was repeated employing the polymeric blends shown in Table 1 as the surface layer. The same polypropylene and LLDPE-$C_8$ were employed. For purposes of comparison, data regarding films of 100% polypropylene and another with 100% linear low density copolymer of ethylene and octene-1, LLDPE-$C_8$, are shown in Table 1.

The skin/skin coefficient of friction data was obtained in the following manner. The coefficient of friction values referred to herein have been determined according to the procedure of ASTM D 1894-78, modified as follows: The film to film area of contact is 5.08 (2 inches) by 2.54 cm (1 inch), instead of 6.35 cm (2 1/2 inches) by 6.35 cm (2 1/2 inches). The mass of the sled is 100 grams rather than 200 grams and the sled speed is 15.24 cm (6 inches) per minute, the same as ASTM D 1894-78. Thus, the modified test is run at the condition of 7.8 grams/cm$^2$ (50 grams/inches$^2$) rather than 5 gms/cm$^2$ (32 grams/inches$^2$). Table 1 illustrates by way of comparison with polypropylene the dramatic reduction in COF of films by using the surface layer.

Table 1

| Surface Layer | Skin/Skin COF |
|---|---|
| 100% polypropylene/0% | 0.64 |
| 96% polypropylene/4% LLDPE–$C_8$ | 0.34 |
| 94% polypropylene/6% LLDPE–$C_8$ | 0.32 |
| 92% polypropylene/8% LLDPE–$C_8$ | 0.28 |
| 85% polypropylene/15% LLDPE–$C_8$ | 0.26 |
| 67% polypropylene/33% LLDPE–$C_8$ | 0.27 |
| 33% polypropylene/67% LLDPE–$C_8$ | 0.38 |
| 2% polypropylene/98% LLDPE–$C_8$ | 1.0 |
| 0% polypropylene/100% LLDPE–$C_8$ | 1.0 |

As indicated above these films have no COF or slip agents added thereto. It is to be understood, however, that the films may contain conventional additives, including COF or slip agents to further enhance the COF or slip characteristics.

EXAMPLE 2

Example 1 was repeated except that the molten resin from the satellite extruder comprised 4% by weight of the above-defined medium density polyethylene and 96% by weight of the polypropylene.

The procedure was repeated employing the skin layer blends shown in Table 2. For purpose of comparison, data regarding a film of 100% polypropylene is shown in Table 2. The medium density polyethylene cannot constitute 100% of the skin layer because it is too soft and is translucent. A clear film is a commercial necessity. At percentages of about 60 to 100% MDPE or HDPE, the skin or skins are too soft and too hazy.

The skin/skin coefficient of friction data was obtained in the manner described in Example 1.

Table 2

| Surface Layer | Skin/Skin COF |
|---|---|
| 100% polypropylene/0% MDPE | 1.00 |
| 96% polypropylene/4% MDPE | 0.40 |
| 94% polypropylene/6% MDPE | 0.34 |
| 92% polypropylene/8% MDPE | 0.34 |
| 67% polypropylene/33% MDPE | 0.33 |
| 33% polypropylene/67% MDPE | 0.32 |

As indicated above these films have no COF or slip agents added thereto. It is to be understood, however, that the film may contain conventional additives to further enhance COF or slip characteristics.

The procedure outlined in Example 2 above was repeated except that different blends of high density polyethylene DX 611 were used. The results are shown in Table 3.

Table 2

| Surface Layer | Skin/Skin COF |
|---|---|
| 100% polypropylene/0% MDPE | 1.00 |
| 96% polypropylene/4% MDPE | 0.40 |
| 94% polypropylene/6% MDPE | 0.34 |
| 92% polypropylene/8% MDPE | 0.34 |
| 67% polypropylene/33% MDPE | 0.33 |
| 33% polypropylene/67% MDPE | 0.32 |

## Claims

1. An oriented film structure comprising a polypropylene film having on at least one surface thereof a polymeric layer of a blend of:
   (A)(I) a linear low density copolymer of ethylene with a minor proportion of a $C_3$-$C_{10}$ alpha olefin and
   (II) polypropylene; or
   (B)(I) a member selected from medium density polyethylene, high density polyethylene and mixtures thereof and
   (II) polypropylene.

2. The film structure of claim 1 wherein the blend comprises from 2 to 90 wt.% of (A)(I).

3. The film structure of claim 2 wherein (A)(I) comprises from 4 to 70 wt.% of (A)(I).

4. The film structure of claim 2 wherein (A)(I) comprises from 2 to 8 wt.% of the alpha olefin.

5. The film structure of claim 4 wherein (A)(I) comprises from 2.5 to 5 wt.% of the alpha olefin.

6. The film structure of claim 1 wherein the blend comprises from 2 to 60 wt.% of (B)(I).

7. The film structure of any of the preceding claims wherein the polymeric layer is on both surfaces of the polypropylene film.

8. The structure of any one of the preceding claims wherein the polymeric layer has a lower coefficient of friction than the polypropylene film.

9. A method for making an oriented film structure comprising: applying to at least one surface of a polypropylene film a polymeric layer of a blend of:
   (A)(I) a linear low density copolymer of ethylene with a minor proportion of a $C_3$-$C_{10}$ alpha olefin and
   (II) polypropylene; or
   (B)(I) a member selected from medium density polyethylene, high density polyethylene and mixtures thereof, and
   (II) polypropylene,
   bringing the combined films to a stretch-orientable condition, and
   stretching it in at least one direction.

10. The method of claim 9 wherein the polymer layer is applied to the polypropylene film during coextrusion through a die followed by cooling prior to biaxial orientation.

## Patentansprüche

1. Orientierte Filmstruktur, bestehend aus einem Polypropylenfilm, der auf wenigstens einer Oberfläche eine Polymerschicht einer Mischung aus
   (A)(I) einem linearen Ethylencopolymer niedriger Dichte mit einem kleineren Anteil eines $C_3$- bis $C_{10}$-$\alpha$-Olefins und
   (II) Polypropylen, oder
   (B)(I) einem Polyethylen mittlerer Dichte, einem Polyethylen hoher Dichte oder einem Gemisch aus beiden und
   (II) Polypropylen aufweist.

2. Filmstruktur nach Anspruch 1, dadurch gekennzeichnet, daß die Mischung 2 bis 90 Gew.-% (A)(I) enthält.

3. Filmstruktur nach Anspruch 2, dadurch gekennzeichnet, daß (A)(I) 4 bis 70 Gew.-% (A)(I) enthält.

4. Filmstruktur nach Anspruch 2, dadurch gekennzeichnet, daß (A)(I) 2 bis 8 Gew.-% $\alpha$-Olefin enthält.

5. Filmstruktur nach Anspruch 4, dadurch gekennzeichnet, daß (A)(I) 2,5 bis 5 Gew.-% $\alpha$-Olefin enthält.

6. Filmstruktur nach Anspruch 1, dadurch gekennzeichnet, daß die Mischung 2 bis 60 Gew.-% (B)(I) enthält.

7. Filmstruktur nach einem der vorhergehenden Ansprüche, dadurch gekennzeichnet, daß sich die Polymerschicht auf beiden Oberflächen des Polypropylenfilms befindet.

8. Struktur nach einem der vorhergehenden Ansprüche, dadurch gekennzeichnet, daß die Polymerschicht einen niedrigeren Reibungskoeffizienten als der Polypropylenfilm ausweist.

9. Verfahren zur Herstellung einer orientierten Filmstruktur durch Auftragen einer Polymerschicht einer Mischung aus

(A)(I) einem linearen Ethylencopolymer niedriger Dichte mit einem kleineren Anteil eines C$_3$- bis C$_{10}$-α-Olefins und

(II) Polypropylen, oder

(B)(I) einem Polyethylen mittlerer Dichte, Polyethylen hoher Dichte oder einem Gemisch aus beiden und

(II) Polypropylen,

auf wenigstens eine Oberfläche eines Polypropylenfilms, Überführen der miteinander kombinierten Filme in eine Lage zum Orientieren durch Recken, und schließlich durch Recken der Anordnung in wenigstens einer Richtung.

10. Verfahren nach Anspruch 9, dadurch gekennzeichnet, daß die Polymerschicht auf den Polypropylenfilm während eines Koextrudierens durch eine Düse aufgetragen wird und sich eine Abkühlung anschließt, bevor eine biaxiale Orientierung erfolgt.

**Revendications**

1. Une structure à film orienté comprenant un film de polypropylène ayant sur au moins une de ses surfaces une couche polymère d'un mélange de:

(A)(I) un copolymère linéaire de basse densité d'éthylène avec une proportion mineure d'une alpha-oléfine en C$_3$–C$_{10}$ et

(II) du polypropylène; ou bien

(B)(I) un élément choisi parmi le polyéthylène de densité moyenne, le polyéthylène de haute densité et des mélanges des deux et

(II) du polypropylène.

2. La structure en film selon la revendication 1, selon laquelle le mélange comprend 2 à 90% en poids de (A)(I).

3. La structure en film selon la revendication 2, selon laquelle (A)(I) comprend 4 à 70% en poids de (A)(I).

4. La structure en film selon la revendication 2, selon laquelle (A)(I) comprend 2 à 8% en poids d'alpha-oléfine.

5. La structure en film selon la revendication 4, selon laquelle (A)(I) comprend 2,5 à 5% en poids d'alpha-oléfine.

6. La structure en film selon la revendication 1, selon laquelle le mélange comprend 2 à 60% en poids de (B)(I).

7. La structure en film selon l'une quelconque des revendications précédentes, selon laquelle la couche polymère est sur les deux surfaces du film de polypropylène.

8. La structure selon l'une quelconque des revendications précédentes, selon laquelle la couche polymère a un coefficient de frottement inférieur à celui du film de polypropylène.

9. Un procédé pour fabriquer une structure en film orientée consistant: à appliquer sur au moins une surface d'un film de polypropylène une couche polymère d'un mélange de:

(A)(I) un copolymère linéaire de basse densité d'éthylène avec une proportion mineure d'une alpha-oléfine en C$_3$–C$_{10}$ et

(II) du polypropylène; ou bien

(B)(I) un élément choisi parmi le polyéthylène de densité moyenne, le polyéthylène de haute densité et des mélanges des deux et

(II) du polypropylène,

à amener les films combinés dans un état orientable par étirage, et à les étirer dans au moins une direction.

10. Le procédé selon la revendication 9, selon lequel la couche polymère est appliquée au film de polypropylène durant la coextrusion à travers une filière puis refroidie avant l'orientation biaxiale.